# FASCICULE DE BREVET EUROPEEN

(11) **EP 1 028 015 B1**
(45) Date de publication et mention de la délivrance du brevet: **05.10.2005**
(21) Numéro de dépôt: 00400365.3
(22) Date de dépôt: 09.02.2000
(51) Int. Cl.: B60J 5/04

(54) **Doublure intérieure de portière d'automobile, portière correspondante et procédé d'assemblage pour l'obtention d'une telle portière**
Innenteil einer Fahrzeugtür, korrespondierende Tür und Verfahren für den Zusammenbau einer solchen Tür
Inner part of a vehicle door, corresponding vehicle door and method of assembling such a door

(30) Priorité: 12.02.1999 FR 9901747
(43) Date de publication de la demande: 16.08.2000
(73) Titulaire: SAI AUTOMOTIVE ALLIBERT INDUSTRIE, 92000 Nanterre (FR); ArvinMeritor Light Vehicle Systems-France, 45600 Sully sur Loire (FR)
(72) Inventeur: Praud,Jean-Pierre, 94430 Auvers-sur-Oise (FR); Arquevaux, Laurent, 45600 Sully-sur-Loire (FR); Hesse, Christophe, 57463 Olpe (DE); Delire, Philippe, 72170 Beaumont-sur-Sarthe (FR)
(74) Mandataire: Lerner, François

(56) Documents cités:
- DE-A- 19 537 504
- FR-A- 2 762 262
- US-A- 5 111 620
- US-A- 5 537 781
- US-A- 5 819 473

## Description

L'invention concerne le domaine des portières de véhicules, en particulier de véhicules légers.

Les portières des véhicules actuels comprennent habituellement un panneau extérieur de portière, typiquement en tôle, et une doublure intérieure présentant en général un revêtement d'habillage.

Des éléments fonctionnels adaptés au fonctionnement de la portière sont interposés entre le panneau extérieur et sa doublure intérieure.

Ces éléments fonctionnels comprennent en général au moins un rail de lève-vitre, pour monter ou descendre la vitre de la portière, et une serrure de portière, ainsi que diverses autres pièces (connecteurs électriques, guide-vitre,...).

Il a déjà été proposé d'intégrer tout ou partie de ces éléments fonctionnels à la doublure intérieure de portière.

Ainsi, la doublure intérieure de portière d'automobile à laquelle se rapporte l'invention comprend :
- un panneau porteur rigide,
- et des éléments fonctionnels adaptés au fonctionnement de la portière.

Sur ce type de pièce "intégrée", un problème se pose concernant la manière dont on doit monter les éléments fonctionnels sur le panneau porteur afin :
- d'assurer un positionnement relativement facile et fiable des éléments fonctionnels dans leur position opératoire de fonctionnement sur la porte (une fois les différentes pièces qui la compose assemblées entre elles),
- d'assurer un montage également relativement facile et fiable de la doublure intérieure vis-à-vis du panneau extérieur de portière devant la recevoir,
- d'intégrer les deux opérations ci-avant au cycle général de montage du véhicule, et en particulier au cycle de préparation de la portière. Une telle doublure intérieure est connue pour le document US-5819473.

Dans le but de faciliter cette intégration d'éléments fonctionnels à la doublure intérieure de portière, une première caractéristique de l'invention prévoit que certains au moins de ces éléments fonctionnels soient liés au panneau porteur de la doublure, de façon mobile, par des moyens de liaison et de guidage qui dirigent les éléments fonctionnels concernés suivant un mouvement guidé par rapport au porteur entre une première position, de prémontage, destinée à permettre le positionnement de la doublure sensiblement contre un panneau extérieur de portière, et une seconde position, opératoire de fonctionnement.

De cette manière, l'élément fonctionnel concerné pourra être placé dans des positions différentes, suivant par exemple qu'on le transporte avec la doublure vers le poste d'assemblage du constructeur du véhicule, ou que, sur ce poste d'assemblage, l'opérateur dispose cet élément fonctionnel dans la portière (en même temps qu'il va y placer la doublure), l'élément fonctionnel étant alors amené dans sa position opératoire de fonctionnement, suivant ledit mouvement guidé par rapport au panneau porteur de la doublure.

Toujours en liaison avec la maîtrise des coûts et la rapidité, facilité et fiabilité de montage des éléments fonctionnels, un autre problème que l'invention a pris en compte concerne le positionnement en profondeur des éléments fonctionnels concernés vis-à-vis du panneau porteur (et plus généralement de la doublure intérieure) et/ou du panneau extérieur de portière.

Ceci a amené à prévoir que les moyens précités de liaison et de guidage des éléments fonctionnels en cause comprennent, de préférence, au moins un support intégré au panneau porteur et décalé (en saillie ou en retrait) par rapport à une surface de celui-ci, ce support intégrant une zone de guidage pour diriger lesdits éléments fonctionnels par rapport au panneau porteur, suivant le "mouvement guidé" prévu.

En liaison avec les questions précitées de coût et de facilité/fiabilité de fabrication et de montage, ainsi que pour obtenir certaines caractéristiques mécaniques particulières, une caractéristique complémentaire de l'invention prévoit que le panneau porteur, et donc le support, comprennent avantageusement, exclusivement ou essentiellement, un matériau de synthèse tel qu'au moins une matière plastique (ceci donc de préférence à un métal ou alliage métallique).

Suivant un mode de réalisation préféré d'une doublure de portière conforme à l'invention, deux éléments fonctionnels sont plus particulièrement concernés : un rail de lève-vitre et une serrure (et/ou son porte serrure).

Dans ces conditions :
- concernant le rail de lève-vitre, une première réalisation prévoit que celui-ci soit lié, avec un axe de rotation, à une nervure faisant saillie du plan général du panneau support, en étant mobile en rotation autour de ce pilier,
- en ce qui concerne la serrure et/ou son porte-serrure, il est prévu qu'ils soient disposés avantageusement dans une coulisse liée au panneau support, pour coulisser de préférence entre une position de pré-montage et une position opérationnelle (ou position de fixation),
- concernant à nouveau le rail de lève-vitre, un autre mode de réalisation prévoit que celui-ci puisse être fixé à un parallélogramme déformable lié au panneau support, permettant ainsi de rapprocher ou d'écarter à volonté, au moins localement, le rail vis-à-vis du panneau support.

En s'inspirant de cette dernière caractéristique, il est d'ailleurs prévu, selon une autre caractéristique de l'invention, que les moyens de liaison et de guidage de l'élément fonctionnel concerné puissent comprendre des moyens déformables entre deux positions extrêmes, pour guider le mouvement dudit élément entre ces positions.

Un autre souci de l'invention étant l'amélioration de la résistance mécanique d'ensemble de la doublure ainsi que de la portière dans son ensemble, avec une reprise favorable des efforts, une caractéristique complémentaire de la présente invention envisage favorablement que la doublure, ainsi que les éléments fonctionnels concernés, présentent des passages de fixation, pour une fixation de ces éléments et/ou de la doublure au panneau extérieur de portière.

On notera d'ailleurs que l'invention concerne également une portière de véhicule dans son ensemble avec, comme particularité, que cette portière comprendra avantageusement :
- un panneau extérieur de portière, typiquement en tôle (mais il pourrait s'agir d'une autre matière, telle qu'une matière plastique ou une matière "composite"),
- une doublure intérieure de portière reprenant tout ou partie des caractéristiques ci-avant énoncées et typiquement essentiellement en matière plastique, cette doublure étant fixée au panneau extérieur de portière par des premiers moyens de fixation rapportés et certains au moins des éléments fonctionnels étant également fixés au panneau de portière par lesdits premiers moyens de fixation rapportés et/ou par des seconds moyens de fixation rapportés.

Avec un tel guidage prévu de certains au moins des éléments fonctionnels vis-à-vis du panneau porteur de la doublure, il sera au demeurant possible de les guider entre une première position de prémontage et une seconde position de fixation dans laquelle des zones de fixation prédéterminées sur le panneau extérieur de portière et sur ses éléments fonctionnels coïncideront.

Ainsi, on pourra effectivement prévoir que tel ou tel élément fonctionnel puisse occuper sa première position de prémontage chez l'équipementier et pendant le transport entre l'équipementier et le constructeur automobile où l'opérateur du poste d'assemblage de portière déplacera (suivant donc un mouvement imposé) l'élément fonctionnel vers sa seconde position de fixation dans laquelle il pourra assembler l'élément fonctionnel et le panneau extérieur de portière.

On notera qu'en liaison avec cette fixation élément fonctionnel/panneau extérieur de portière, ces deux pièces comprendront avantageusement en outre des moyens complémentaires d'indexage pour un positionnement relatif univoque en vue de leur fixation relative.

En particulier, selon une caractéristique complémentaire de l'invention, ces moyens complémentaires d'indexage comprendront avantageusement des moyens mâle(s) et femelle(s) de maintien disposés en correspondance sur le panneau et l'élément fonctionnel concerné, les moyens mâles s'engageant et se bloquant dans les moyens femelles (dans ladite seconde position de fixation) pour retenir entre eux le panneau extérieur et l'élément fonctionnel en cause.

Outre ce qui vient d'être présenté, l'invention concerne encore un procédé d'assemblage entre un élément fonctionnel et un panneau extérieur de portière, ce procédé se caractérisant en particulier en ce que :
- on lie, dans une position de pré-assemblage, l'élément fonctionnel au panneau porteur de la doublure de portière de façon mobile, par l'intermédiaire de moyens de liaison et de guidage,
- on place cet élément fonctionnel dans une première position, de prémontage, destinée à permettre le positionnement de la doublure sensiblement contre le panneau extérieur,
- on apporte, dans un poste d'assemblage, la doublure de porte comprenant son panneau porteur via l'élément fonctionnel,
- on y dispose le panneau support sensiblement contre le panneau extérieur de portière, et
- on place l'élément fonctionnel dans une seconde position, opératoire de fonctionnement, le mouvement entre les deux positions étant guidé par les moyens de liaison et de guidage appropriés, et
- on fixe au panneau extérieur, la doublure et éventuellement l'élément fonctionnel.

Une description plus détaillée de l'invention va maintenant être fournie, en référence aux dessins annexés, dans lesquels :
La figure 1 est une vue schématique en perspective d'un premier mode de réalisation d'une doublure de portière conforme à l'invention ;
la figure 2 est une vue schématique en coupe selon la ligne II-II de la figure 1, montrant en outre un panneau extérieur contre lequel la doublure de la figure 1 a été placée ;
la figure 3 montre le panneau de portière de la figure 2 en vue de face (côté intérieur) avec un rail de lève-vitre dans deux positions différentes ;
la figure 4 est une vue schématique éclatée d'une variante de réalisation d'une doublure de portière conforme à l'invention ;
la figure 5 montre en vue agrandie le détail V de la figure 3, sans le rail;
la figure 6 montre en vue agrandie une partie supérieure du rail de la figure 3 devant se placer en face du détail V ;
la figure 7 montre en vue agrandie une partie inférieure du rail de la figure 3 devant se placer en face du détail VIII ;
la figure 8 montre en vue agrandie le détail VIII de la figure 3, sans le rail;
la figure 9 montre schématiquement une autre variante de réalisation d'une doublure intérieure de portière conforme à l'invention ;
la figure 10 est une coupe schématique selon la ligne X-X de la figure 9 ;
et la figure 11 est une coupe schématique selon la ligne XI-XI de la figure 9 ;

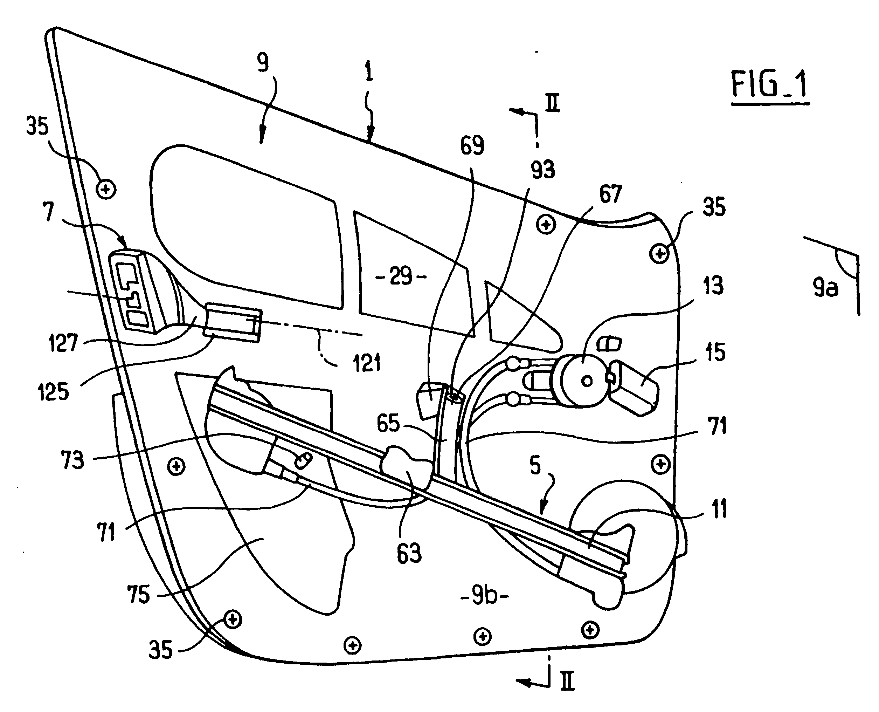

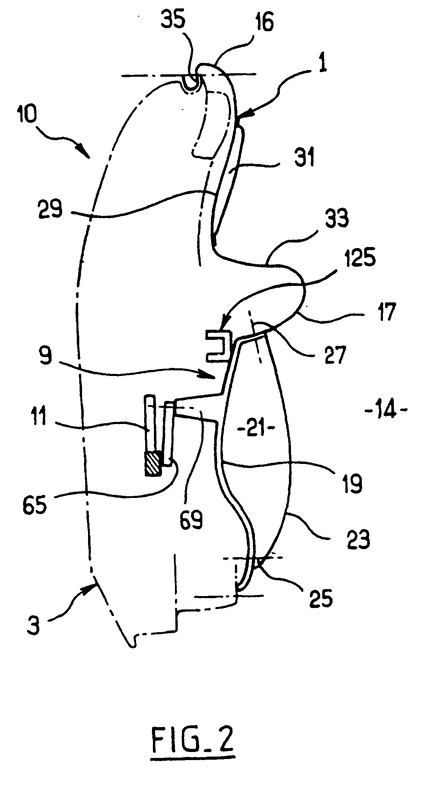

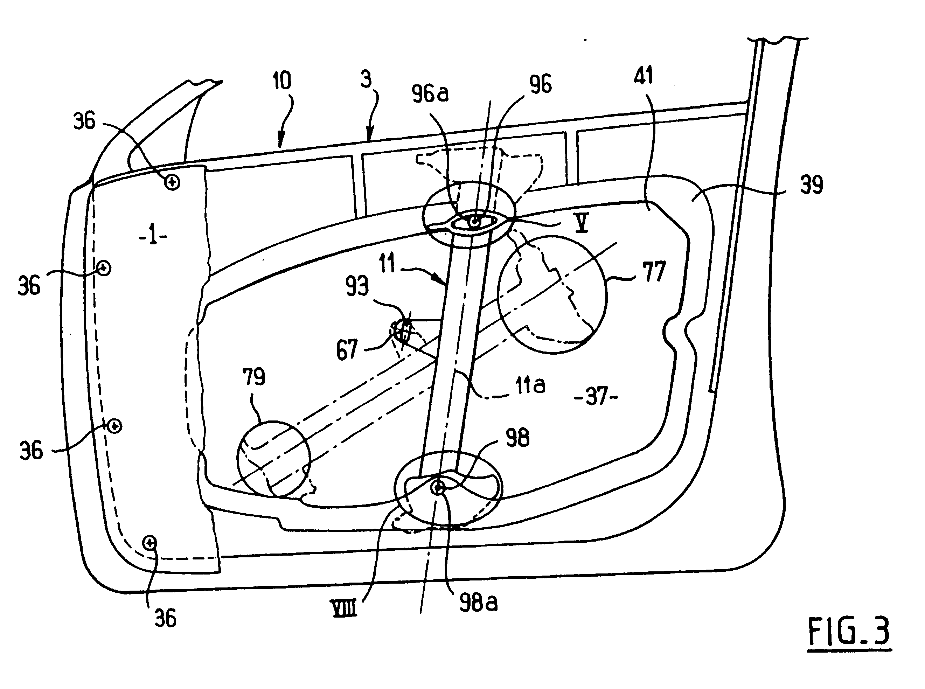

Sur la figure 1 tout d'abord, on voit représentée schématiquement une doublure de porte 1 adaptée pour être montée par exemple sur le panneau extérieur de portière 3 illustré sur les figures 2 et 3, de manière à constituer avec lui, ainsi qu'avec divers éléments fonctionnels mécaniques et/ou électriques ou électroniques (tels qu'un mécanisme lève-vitre repéré dans son ensemble 5 et une serrure repérée dans son ensemble 7 sur la figure 1), une portière complète montrée partiellement sur la figure 3 et repérée dans son ensemble 10.

La doublure de porte 1 de la figure 1 comprend un panneau porteur principal 9 en matière plastique qui va servir de porteur ou de support (au moins temporairement) à certains au moins des éléments fonctionnels de la portière, tels le rail de lève-vitre 11 avec sa commande 13 pourvu d'un moteur électrique 15, ou la serrure 7.

Le panneau porteur 9 est en l'espèce en matière plastique rigide, tel que du polypropylène.

Ce panneau porteur occupe l'essentiel de la surface de la doublure de garnissage intérieure de porte 1 et, comme on peut le voir sur la figure 2, présente, en section, une forme avec de nets reliefs adaptés à la forme extérieure que doit présenter la doublure 1 du côté de l'habitacle 14 du véhicule.

Ainsi, le panneau porteur 9 présente t-il une partie extrême supérieure bombée 16, donnant "du volume" à la porte, ainsi qu'un profond bourrelet 17 sensiblement à mi-hauteur, pouvant servir d'appui pour l'avant-bras de l'occupant situé dans l'habitacle, et un creux inférieur 19 pour constituer une zone de vide-poche 21, en liaison ici avec une paroi plastique rapportée 23 fixée en 25 et 27 au panneau porteur.

Comme on le voit en comparant les figures 1 et 2, le panneau porteur 9 présente également, entre son renflement supérieur 16 et son bourrelet 17, une découpe allongée 29 permettant l'accès à l'intérieur de la portière.

Dans l'exemple retenu, l'ouverture 29 est recouverte par un panneau rapporté d'habillage (ou médaillon) 31 fixé (éventuellement de manière amovible) au panneau porteur 9 par exemple par des agrafes (non représentées).

Outre le médaillon 31 et le panneau porteur 9, la doublure de porte 1 comprend une feuille décorative de revêtement 33 recouvrant tout ou partie du panneau porteur 9 du côté de l'habitacle 14 (côté visible depuis l'intérieur du véhicule).

En l'espèce, le revêtement décoratif 33 recouvre le panneau porteur 9 entre ses zones 16 et 17.

Il s'agit d'un tissu surmoulé sur le panneau porteur. En alternative, il pourrait s'agir d'un autre revêtement, tel que cuir, feuille plastique souple..., avec ou sans interposition d'une couche de mousse, le revêtement retenu pouvant être par exemple collé (ou fixé de toute autre manière appropriée) au panneau 9.

Comme on le voit sur les figures 1 et 3, une telle doublure intérieure 1 peut être fixée, à travers des orifices périphériques 35, par des agrafes 36 au panneau extérieur de porte 3 qui peut typiquement se présenter comme un caisson et comprendre une tôle extérieure 37 doublée localement par une tôle intérieure 39, tel que le montre la figure 3 où l'on peut d'ailleurs constater que la tôle intérieure 39 comprend une très large ouverture centrale 41.

A noter que rien n'empêcherait que le panneau extérieur de porte 3 soit en un autre métal, voire en matière plastique ou en matière composite, notamment.

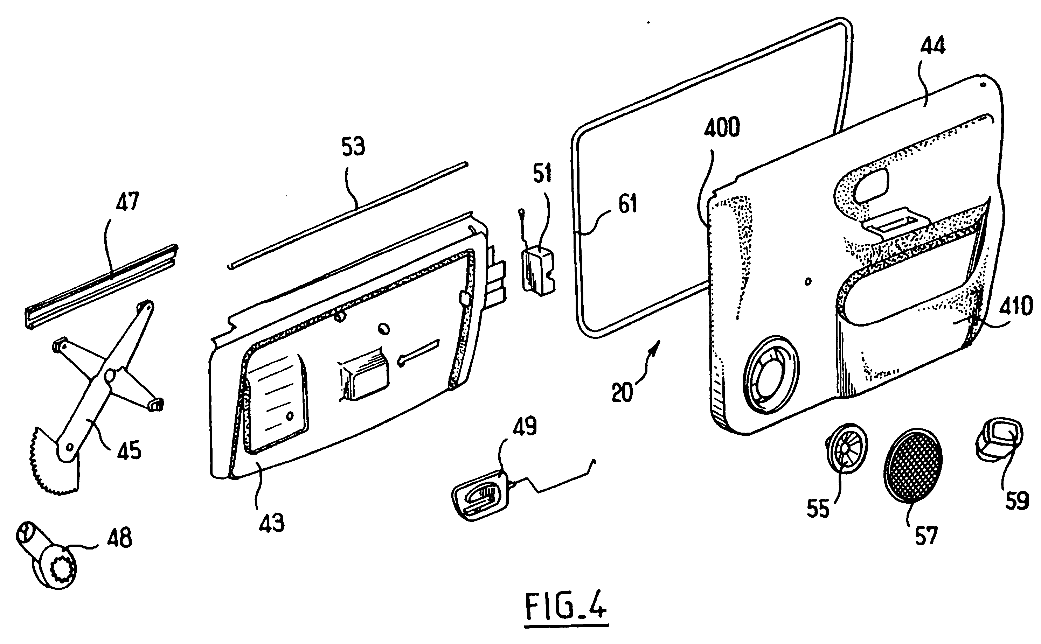

Une alternative de réalisation d'une doublure de porte a été représentée sur la figure 4 et repérée dans son ensemble 20.

Sur cette figure, on peut constater que le panneau porteur 43 est sensiblement plat et ne participe pas à la forme de la doublure d'habillage 20, cette fonction étant dédiée au panneau d'habillage rapporté 44.

Le panneau porteur 43 s'étend sur environ la moitié supérieure de la hauteur du panneau d'habillage 44.

Le panneau 43 est métallique (acier) bien qu'il pourrait être en matière plastique ou en matériau composite (à base de bois, de fibres de verre...).

A ce panneau 43, sont destinés à être fixés le mécanisme lève-vitre 45 équipé de sa glissière (ou rail) lève-vitre 47, le moteur de lève-vitre 48, la poignée intérieure de porte 49, la serrure 51 et le joint lécheur intérieur 53.

Le panneau d'habillage 44 est constitué par un insert rigide 400 (en matière plastique) recouvert, du côté visible du panneau, par un revêtement d'habillage esthétique 410, ceci par toute technique appropriée (surmoulage, collage, ..., avec ou sans interposition d'une couche de mousse).

Un haut-parleur 55 avec sa grille 57 et un bouton d'actionnement du mécanisme lève-vitre 59 sont fixés au panneau d'habillage 44.

En outre, les panneaux 43 et 44 sont fixés entre eux par tout moyen approprié (non représenté), tel que des agrafes périphériques traditionnelles et en général démontables.

Un joint d'étanchéité 61 est interposé entre les deux panneaux.

Ceci montre que le panneau porteur prévu dans la doublure de porte de l'invention peut se présenter de différentes manières, avoir différentes fonctions, avoir différentes formes, différentes dimensions, être constitué en différents matériaux et être ou non intégré au panneau décoratif de la doublure.

Dans ce qui suit, on ne reviendra pas sur le mode de réalisation de la figure 4, bien que les caractéristiques de montage des éléments fonctionnels que l'on va maintenant décrire puissent lui être appliquées.

Intéressons-nous donc à la figure 1 pour remarquer que le lève-vitre 11, ici constitué par un rail sensiblement rectiligne le long duquel est mobile un coulisseau 63, est monté sur le panneau porteur 9 par l'intermédiaire d'un bras transversal 65 fixé de manière pivotante autour d'un axe 67 perpendiculaire au plan général 9a du panneau porteur 9 (par exemple par une vis), de manière que le rail 11 puisse tourner autour de 67 dans un plan parallèle au plan 9a.

Les pièces 11 et 65 sont des pièces métalliques. Il pourrait s'agir de pièces plastiques ou de pièces composites.

Dans l'exemple, le bras 65 est monté à l'extrémité libre d'une nervure en forme de pilier 69 faisant saillie à la surface 9b du panneau porteur 9 auquel le pilier 69 est intégré (moulé en une seule pièce).

Ainsi, le débattement du rail 11 va être guidé par son rayon de rotation autour de l'axe 67.

Après avoir fixé notamment la commande 13 et le moteur électrique 15 avec le câblage associé 71, l'équipementier automobile concerné va pouvoir monter le rail 11, comme indiqué ci-avant, et ainsi être déjà en mesure de livrer au constructeur automobile une doublure d'habillage 1 à éléments fonctionnels "intégrés" en ce qu'ils sont préfixés au panneau porteur 9 et prêts à être rapportés sur le panneau extérieur de portière.

En l'espèce, pour la sécurité de transport et de manutention avant assemblage chez le constructeur, un ergot 73 fait saillie d'un bloc de mousse d'absorption de choc 75 également fixé (par exemple collé) au panneau porteur 9.

Interposé entre le rail 11 et l'un des câbles 71, l'ergot 73 bloque sensiblement en rotation le rail dans une position "escamotée" à l'intérieur du périmètre protecteur du panneau porteur 9, ceci bien entendu de manière libérable.

Sur la figure 3, n'apparaît du panneau porteur et de ses éléments fonctionnels rapportés que le rail 11, respectivement dans sa première position de prémontage (position de la figure 1) représentée en trait mixte et dans sa position de fixation représentée en trait plein.

Dans sa position de prémontage, le rail 11 est incliné par rapport à la verticale d'un angle qui peut être compris entre 45° et 90° environ.

Par contre, dans sa position de fixation (trait plein sur la figure 3), le rail 11 est redressé jusqu'à être sensiblement vertical, après avoir pivoté autour de l'axe 67.

Dans cette seconde position, le rail est prêt à être utilisé, c'est-à-dire qu'il occupe une position appropriée pour monter ou descendre correctement la vitre (non représentée).

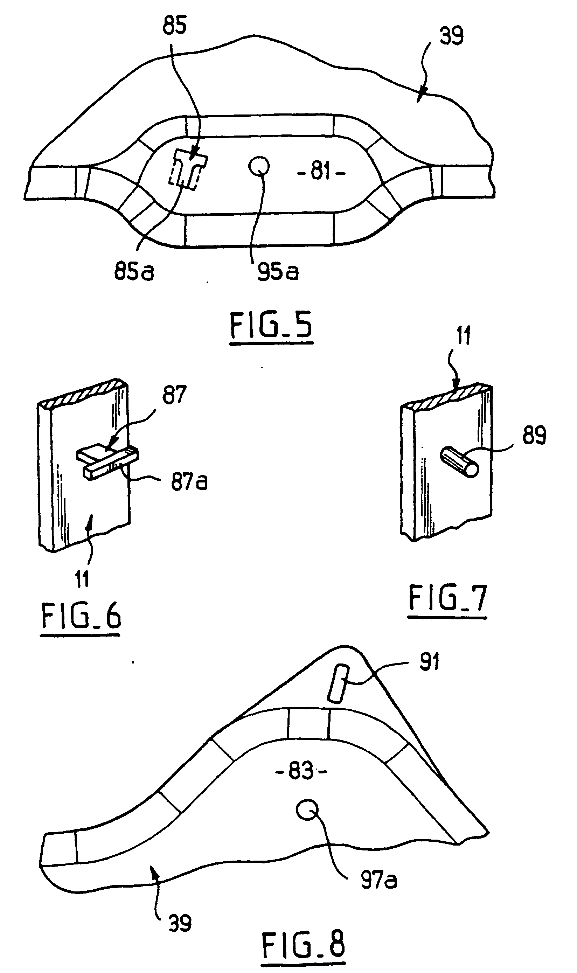

Il est à noter que cette rotation du rail 11 permet en l'espèce de passer le rail à l'intérieur de l'ouverture 41 du panneau 3, en permettant ainsi aux deux zones de fixation, respectivement supérieure 77 et inférieure 79 du rail, d'être engagées derrière les zones complémentaires de fixation, respectivement supérieure 81 et inférieure 83, de la tôle intérieure 39 (figures 5 et 8).

En effet, on peut voir sur la figure 3 que, lorsqu'il est presque horizontal dans sa position de prémontage (en trait fantôme), le rail lève-vitre 11 peut passer dans l'ouverture 41, ce qui n'est pas le cas dans sa position redressée de fixation.

Pour établir et maintenir le rail 11 dans sa position redressée, la zone 81 du panneau intérieur de caisson 39 comprend une ouverture d'indexage 85 en forme de "T" (figure 5) dans laquelle vient s'engager un pion saillant 87 se dressant perpendiculairement à une surface du rail en regard (figure 6).

Le pion 87 présente lui aussi une forme en "T" pour venir se bloquer par sa barre 87a derrière les parois latérales de la partie étroite 85a de l'ouverture 85, retenant ainsi le rail tant en rotation autour de son axe 67 qu'en inclinaison par rapport au plan 9a (inclinaison non autorisée en l'espèce).

En partie basse, le rail 11 comprend par ailleurs un second pion saillant 89 (sans tête élargi, voir figure 7) reçu étroitement dans un trou oblong 91 (figure 8) du panneau 39 ménagé dans la zone 83, bloquant ainsi de façon complémentaire la rotation du rail.

A noter qu'un coulissement de ce rail 11 est autorisé à l'endroit de son axe de rotation 67 (via par exemple une rainure 93 ménagée dans la barre de liaison 65), pour permettre son engagement derrière les parois latérales de l'ouverture 85.

Ainsi engagé et indexé, le rail est fixé au panneau 39 par des vis (96, 98) pénétrant dans des ouvertures complémentaires du rail (96a, 98a ; figure 3) et du panneau (respectivement 95a et 97a, figures 5 et 8).

D'autres moyens d'indexage et/ou de fixation auraient pu être prévus.

A noter que l'ouverture 29 facilite au moins le vissage supérieur.

Ainsi, le rail 11 est-il fixé à la fois à la doublure intérieure de porte (panneau porteur 9) et au panneau extérieur 3 (derrière la tôle 39). Eventuellement, à terme, seule la seconde fixation pourrait demeurer.

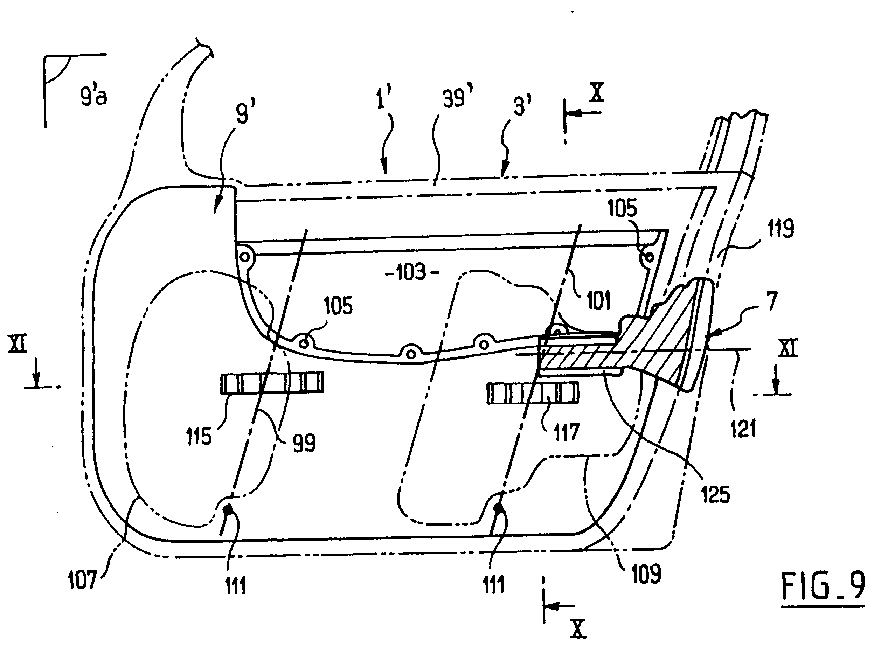

Les figures 9 à 11 illustrent schématiquement un autre montage de rail lève-vitre.

Dans l'exemple, il s'agit de deux rails de lève-vitre 99 et 101, schématisés uniquement par leur axe longitudinal, en trait mixte.

Le panneau porteur, repéré 9', de la doublure de garnissage 1' présente une forme légèrement différente de celui de la figure 3.

Une large ouverture 103 y est ménagée en partie supérieure. Elle doit être à terme recouverte par un "médaillon décoratif" rapporté, prévu pour être fixé à l'endroit des orifices de fixation 105.

En trait fantôme fin à double point, on a figuré certains contours du panneau extérieur 3', et en particulier de larges ouvertures 107, 109 ménagées à travers la paroi intérieure de caisson 39' du panneau pour permettre d'introduire les rails 99, 101, en prévoyant pour cela les caractéristiques qui suivent.

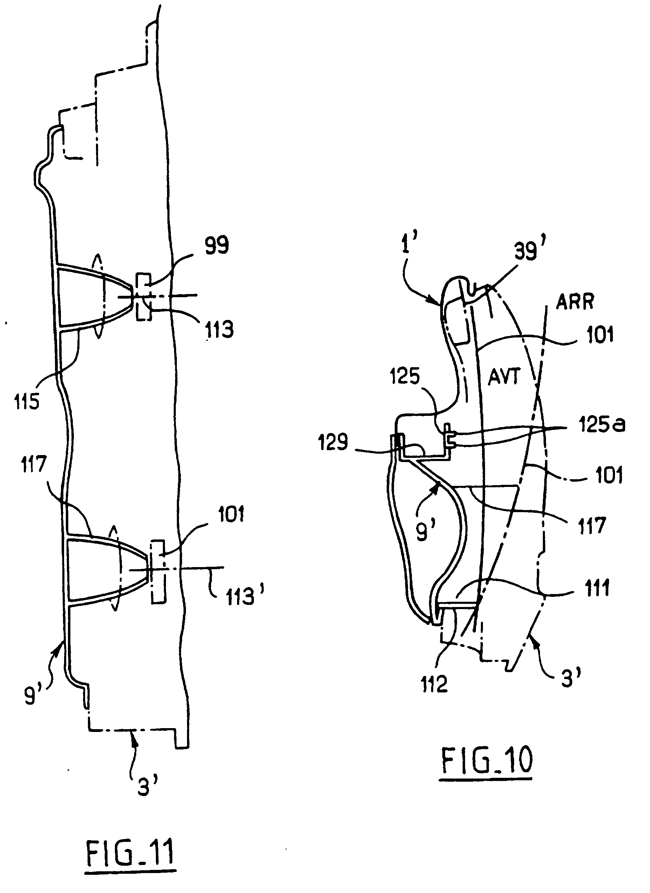

Originellement, chaque rail 99, 101 est fixé à la doublure 1', tout d'abord vers sa base par une patte à charnière (schématisée en 111 en particulier pour le rail 101 de la figure 10), de telle sorte que le rail concerné puisse s'incliner de biais par rapport au plan général supposé vertical 9'a du panneau porteur 9' (voir figure 10, position repérée AR).

La patte 111 est en outre décalée par rapport au plan 9'a via une nervure 112 moulée d'une seule pièce avec le panneau porteur 9'.

Dans la position AR, le haut de chaque rail est plus écarté du panneau porteur que le bas, de telle sorte que l'on peut plus facilement engager cette partie haute des rails à travers les ouvertures 107 et 109 de la paroi 39'.

Après cela, c'est à la partie basse des rails d'être engagée à travers ces mêmes ouvertures. Les rails sont ensuite décalés latéralement pour parvenir dans leur position de la figure 9.

Entre temps, on a rabattu les rails dans leur position opérationnelle "avant" (repérée AVT sur la figure 10 pour le rail 101 alors représenté en trait plein).

On aura compris que les pattes 111 à charnière film permettent le mouvement des rails entre leur position avant et arrière.

Pour toutefois guider et pratiquement indexer le mouvement des rails, ils sont en outre, dans l'exemple, fixés chacun (par exemple par des vis schématisées en 113, 113') à un moyen 115, 117 déformable entre deux positions extrêmes, respectivement écartée et rapprochée du panneau porteur plastique 9' (voir figure 11).

Dans l'exemple de la figure 11, ces moyens 115, 117 sont constitués chacun par un parallélogramme déformable repéré en trait plein dans sa position déployée (écarté du panneau porteur 9') et en trait mixe dans sa position écrasée (rapproché du panneau).

L'articulation de chaque parallélogramme est assurée par une charnière film, le tout étant réalisé en matière plastique malléable, souple, moulée de préférence en une seule pièce avec le panneau porteur 9'.

A cet égard, une réalisation au moins localement bi-matière du panneau 9' est conseillée, la matière "de coeur" du panneau pouvant être une matière plastique rigide, tandis que la matière extérieure "de peau" peut être la matière plus souple utilisable pour réaliser les parallélogrammes 115, 117.

Les deux parallélogrammes pourront être disposés sensiblement à même hauteur, par exemple à peu près à mi-hauteur du panneau (voir repérage schématique 117 sur la figure 10).

Une fois que les rails, correctement engagés dans le caisson de porte 3', sont convenablement rabattus dans leur position avant (AVT), ils sont chacun fixés au panneau intérieur 39' du caisson à travers des orifices (non représentées) prévues dans la doublure d'habillage 1' et par l'intermédiaire de moyens de fixation appropriés (vis en particulier).

Comme on l'a déjà indiqué, des "éléments fonctionnels" de la porte autres que des systèmes de lève-vitre peuvent être concernés par l'invention.

Telle est en particulier le cas de la serrure 7 représentée sur les figures 1 et 9, schématiquement.

Il s'agit ici du bloc serrure/ porte serrure qui s'adapte sur la tranche latérale arrière 119 du panneau extérieur de portière 3' (voir figure 9), dans l'exemple représenté sur cette figure.

Traditionnellement, cette serrure est fixée uniquement à un panneau tôle, tel que 3'.

En l'espèce, il est pré-monté sur la doublure de garnissage concernée, telle en l'espèce que la doublure 1' sur la figure 9 ou 1 sur la figure 1.

En outre, il est mobile en translation suivant un axe 121 sensiblement horizontal vis-à-vis du panneau porteur concerné (9 ou 9').

Pour cela, la serrure 7 est équipée d'une glissière 127 qui peut, comme dans l'exemple représenté, la prolonger axialement d'un côté à la manière d'un bras saillant.

La glissière 127 est adaptée pour s'engager dans un rail de coulissement 125 à axe de coulissement sensiblement horizontal.

Le rail 125 (voir figures 1, 2, 9 et 10) peut être métallique et rapporté (par exemple vissé ou riveté) du côté intérieur du panneau porteur.

Il peut aussi, comme en l'espèce, être réalisé en matière plastique rigide, moulée d'une seule pièce avec le panneau porteur vis-à-vis duquel il est, dans l'exemple représenté sur la figure 10, placé en saillie, à l'extrémité d'une nervure d'écartement 129.

Bien entendu, si la forme du panneau porteur était autre, le rail 125 pourrait se trouver décalé en creux par rapport à la surface générale du panneau, l'essentiel étant d'adapter le positionnement "en profondeur" de la serrure au cas d'espèce rencontré.

De préférence, le rail 125 présentera un double rebord 125a pour retenir la glissière 127, une fois celle-ci engagée dans le rail.

De cette manière, l'équipementier automobile pourra pré-monter la serrure sur la doublure d'habillage qu'il livrera au constructeur.

Dans cette position de "pré-montage", la glissière 127 pourra être en butée arrière, au fond du rail où elle sera donc maintenue latéralement par les rebords 125a, un lien pouvant permettre d'éviter en outre son coulissement le long du rail.

Parvenu chez le constructeur automobile, l'opérateur concerné pourra, au moment de l'assemblage entre la doublure de garnissage et la "tôle" de portière, faire coulisser la serrure 7 le long de l'axe 121 (après retrait du lien) pour l'amener dans sa position de fixation sur cette tôle de portière, à l'emplacement prédéterminé prévu à cet effet (non représenté).

La serrure sera ainsi liée, dans son état opérationnel, à la fois au panneau extérieur de portière et à la doublure de garnissage intérieure, en ayant été guidée dans son mouvement de déplacement depuis sa position de pré-montage (où elle est uniquement liée à la doublure intérieur de portière) jusqu'à sa position opérationnelle sur le panneau extérieur.

Dans ce qui précède, on notera que l'on a prévu des moyens de fixation dissociés pour fixer d'une part la doublure intérieure de garnissage au panneau extérieur de portière et, d'autre part, tel ou tel élément au même panneau extérieur de portière. En alternative, certains au moins de ces moyens relatifs de fixation pourraient être communs (telle vis pouvant être suffisamment longue pour passer à travers, et donc fixer ensemble, la doublure intérieure, l'élément fonctionnel concerné et le panneau extérieur).

A noter que comme éléments "mâle(s) et femelle(s)" de maintien disposés en correspondance sur le panneau extérieur de portière et sur tel élément fonctionnel pour assurer un indexage, on pourrait bien entendu envisager d'autres moyens que ceux précités (tels que 85/87 ou encore 125/127). Si, par exemple, un mouvement associant une rotation et une translation était nécessaire, on pourrait ainsi imaginer une liaison indexée et guidée par un système à baïonnette, par exemple.

## Revendications

1. Doublure intérieure (1, 1') de portière d'automobile comprenant :
- un panneau porteur rigide (9, 9'),
- des éléments fonctionnels (7, 11, 45, 51, 99, 101) adaptés au fonctionnement de la portière, tels qu'au moins un rail lève-vitre (11, 99, 111) pour monter ou descendre la vitre de la portière et une serrure (7) de portière,
**caractérisée en ce que** certains au moins des éléments fonctionnels (7, 11, 45, 51, 99, 101) sont liés au panneau porteur (9, 9') de façon mobile par des moyens de liaison et de guidage (65, 67, 111, 115, 117, 125, 127) qui dirigent le(s) dit(s) élément(s) fonctionnel(s) suivant un mouvement guidé par rapport au panneau porteur entre une première position, de prémontage, destinée à permettre le positionnement de la doublure sensiblement contre un panneau extérieur de portière (3, 3'), et une seconde position, opératoire de fonctionnement.

2. Doublure selon la revendication 1, **caractérisée en ce que** les moyens de liaison et de guidage (65, 67, 111, 115, 117, 125, 127) comprennent au moins un support (69, 112, 129) intégré au panneau porteur et décalé en saillie ou en retrait par rapport à une surface générale de celui-ci (9a, 9'a), ce support intégrant une zone de guidage (67, 111, 125) pour diriger l'élément fonctionnel concerné par rapport au panneau porteur suivant ledit mouvement guidé.

3. Doublure selon la revendication 2, **caractérisée en ce que** le panneau porteur et le support comprennent essentiellement ou exclusivement un matériau de synthèse, tel qu'au moins une matière plastique.

4. Doublure selon l'une quelconque des revendications précédentes, **caractérisée en ce qu'**un rail de lève-vitre (11) est lié, avec un axe de rotation (67), à une nervure (69, 112) faisant saillie au plan général (9a, 9'a) du panneau porteur (9, 9') en étant mobile en rotation autour de, ou par rapport à, cette nervure.

5. Doublure selon l'une quelconque des revendications précédentes, **caractérisée en ce qu'**une serrure et/ou son porte serrure (7) sont disposés dans une coulisse (125) liée au panneau porteur (9').

6. Doublure selon l'une quelconque des revendications précédentes, **caractérisée en ce qu'**elle présente, ainsi que les éléments fonctionnels concernés, des passages de fixation (29, 30, 35,...) pour une fixation de ces éléments et/ou de la doublure à un panneau extérieur de portière (3, 3') tel qu'un panneau en tôle.

7. Doublure selon l'une quelconque des revendications 1 à 3, **caractérisée en ce que** les moyens de liaison et de guidage comprennent des moyens (115, 117) déformables entre deux positions extrêmes pour guider le mouvement des éléments fonctionnels concernés entre ces deux positions.

8. Doublure selon l'une quelconque des revendications 1 à 3 ou 7, **caractérisée en ce qu'**au moins un rail de lève-vitre (99, 101) est fixé à un parallélogramme déformable (115, 117) lié au panneau porteur (9').

9. Doublure selon les revendications 3 et 8, **caractérisée en ce que** le parallélogramme déformable (115, 117) est en matière plastique plus malléable que la matière plastique principale du panneau porteur (9'), cette matière plus malléable recouvrant localement la matière plastique principale du panneau porteur, au moins à proximité de la zone de positionnement du (des) parallélogramme(s).

10. Portière de véhicule automobile comprenant :
- un panneau extérieur de portière (3,3'), tel qu'un panneau en tôle,
- une doublure intérieure de portière (1,1') selon l'une quelconque des revendications précédentes, telle qu'une doublure essentiellement en matière plastique, et
- la doublure intérieure (1, 1') étant fixée au panneau extérieur de portière (3,3') par des premiers moyens de fixation rapportés (36) et certains au moins desdits éléments fonctionnels (11) étant fixés au panneau extérieur de portière par lesdits premiers moyens de fixation rapportés et/ou par des seconds moyens de fixation rapportés (96, 98).

11. Portière selon la revendication 10, **caractérisée en ce que**, vis-à-vis du panneau extérieur de portière, certains au moins des éléments fonctionnels (7, 11, 99, 101) sont mobiles suivant leur mouvement guidé, entre une première position de pré-montage et une seconde position de fixation dans laquelle les zones de fixation (81 et 87) prédéterminées sur le panneau extérieur de portière (3, 39) et sur ces éléments fonctionnels (11) coïncident.

12. Portière selon la revendication 10 ou la revendication 11, **caractérisée en ce que** certains au moins desdits éléments fonctionnels (11) et le panneau extérieur de portière (3) comprennent des moyens complémentaires d'indexage (85a, 87a) pour un positionnement univoque de ces éléments fonctionnels vis-à-vis du panneau extérieur, suivant le mouvement guidé, en vue de leur fixation.

13. Portière selon la revendication 11 et la revendication 12, **caractérisée en ce que** les moyens complémentaires d'indexage comprennent des moyens mâles (87a) et femelles (85a) de maintien, disposés en correspondance sur l'élément fonctionnel concerné (11) et sur le panneau extérieur de portière (3, 39), les moyens mâles (87a) s'engageant et se bloquant dans les moyens femelles (85a), dans la seconde position de fixation, pour retenir entre eux le panneau extérieur et l'élément fonctionnel.

14. Procédé d'assemblage d'un élément fonctionnel (7, 11, 99, 101) de portière d'automobile, tel qu'un rail de lève-vitre (11, 99, 101) et/ou une serrure (7), et d'une doublure intérieure (1, 1') d'une telle portière, sur un panneau extérieur (3, 3') de cette portière, tel qu'un panneau en tôle définissant un caisson (39, 41), **caractérisé en ce que** :
- on lie, dans une position de pré-assemblage l'élément fonctionnel (7,11, 99, 101) à un panneau porteur (9, 9') dont est pourvu la doublure intérieure de portière, en assurant une liaison mobile par l'intermédiaire de moyens de liaison et de guidage (67,125,111,115,117),
- on place cet élément fonctionnel dans une première position, de prémontage, destinée à permettre le positionnement de la doublure intérieure sensiblement contre le panneau extérieur (3, 3'),
- on apporte, dans un poste d'assemblage, la doublure de portière (1, 1') comprenant son panneau porteur lié à l'élément fonctionnel,
- on y dispose le panneau porteur (9, 9') sensiblement contre le panneau extérieur de portière (3, 3') et on place l'élément fonctionnel dans une seconde position, opératoire de fonctionnement, le mouvement entre les deux positions étant guidé par lesdits moyens de liaison et de guidage,
- et on fixe au panneau extérieur (3, 3'), la doublure intérieure (1, 1') et éventuellement l'élément fonctionnel concerné.

## Patentansprüche

1. Innere Wagentürauskleidung (1, 1') eines Kraftfahrzeuges mit:
- einer steifen Trägerplatte (9, 9'),
- Funktionselementen (7, 11, 45, 51, 99, 101), die für die Funktion der Wagentür geeignet sind, z.B. mindestens eine Scheibenhebeschiene (11, 99, 111), um die Scheibe der Wagentür zu heben oder abzusenken, und ein Wagentürschloß (7),
**dadurch gekennzeichnet, daß** mindestens einige der Funktionselemente (7, 11, 45, 51, 99, 101) mit der Trägerplatte (9, 9') durch Verbindungs- und Führungsmittel (65, 67, 111, 115, 117, 125, 127) beweglich verbunden sind, welche das (die) Funktionselement(e) entlang einer Bewegung lenken, die bezüglich der Trägerplatte zwischen einer ersten Vormontageposition, die dazu bestimmt ist, das Positionieren der Auskleidung im wesentlichen gegen eine äußere Platte der Wagentür (3, 3') zu gestatten, und einer zweiten Position für die Betriebsfunktion geführt wird.

2. Auskleidung nach Anspruch 1, **dadurch gekennzeichnet, daß** die Verbindungs- und Führungsmittel (65, 67, 111, 115, 117, 125, 127) mindestens einen Träger (69, 112, 129) aufweisen, der in der Trägerplatte integriert und mit Vorsprung oder mit Rücksprung bezüglich einer Allgemeinfläche derselben (9a, 9'a) abgesetzt ist, wobei dieser Träger eine Führungszone (67, 111, 125) integriert, um das betreffende Funktionselement bezüglich der Trägerplatte entlang der geführten Bewegung zu lenken.

3. Auskleidung nach Anspruch 2, **dadurch gekennzeichnet, daß** die Trägerplatte und der Träger im wesentlichen oder exklusiv ein synthetisches Material, wie zum Beispiel mindestens ein Kunststoffmaterial, aufweisen.

4. Auskleidung nach einem der vorhergehenden Ansprüche, **dadurch gekennzeichnet, daß** eine Scheibenhebeschiene (11) über eine Drehachse (67) mit einer Rippe (69, 112) verbunden ist, die aus der Allgemeinebene (9a, 9'a) der Trägerplatte (9, 9') hervorspringt, wobei sie in Drehung um oder bezüglich dieser Rippe beweglich ist.

5. Auskleidung nach einem der vorhergehenden Ansprüche, **dadurch gekennzeichnet, daß** eine Verschlußvorrichtung und/oder ihre Türverschlußvorrichtung (7) in einer Gleitführung (125) angeordnet sind, welche mit der Trägerplatte (9') verbunden ist.

6. Auskleidung nach einem der vorhergehenden Ansprüche, **dadurch gekennzeichnet, daß** sie ebenso wie die betreffenden Funktionselemente Befestigungsdurchgänge (29, 30, 35, ...) für eine Befestigung dieser Elemente und/oder der Auskleidung an einer äußeren Platte der Wagentür (3, 3'), wie zum Beispiel einer Blechplatte, aufweist.

7. Auskleidung nach einem der Ansprüche 1 bis 3, **dadurch gekennzeichnet, daß** die Verbindungs- und Führungsmittel Mittel (115, 117) aufweisen, die zwischen zwei äußeren Positionen verformbar sind, um die Bewegung der betreffenden Funktionselemente zwischen diesen zwei Positionen zu führen.

8. Auskleidung nach einem der Ansprüche 1 bis 3 oder 7, **dadurch gekennzeichnet, daß** mindestens eine Scheibenhebeschiene (99, 101) an einem verformbaren Parallelogramm (115, 117) befestigt ist, das mit der Trägerplatte (9') verbunden ist.

9. Auskleidung nach den Ansprüchen 3 und 8, **dadurch gekennzeichnet, daß** das verformbare Parallelogramm (115, 117) aus Kunststoffmaterial besteht, das streckbarer ist als das Hauptkunststoffmaterial der Trägerplatte (9'), wobei dieses streckbarere Material lokal das Hauptkunststoffmaterial der Trägerplatte mindestens in der Nähe der Positionierungszone des (der) Parallelogramms (Parallelogramme) bedeckt.

10. Kraftfahrzeugwarentür mit:
- einer äußeren Türplatte (3, 3'), wie zum Beispiel einer Blechplatte,
- einer inneren Wagentürauskleidung (1, 1') nach einem der vorhergehenden Ansprüche, wie zum Beispiel einer Auskleidung im wesentlichen aus Kunststoffmaterial, und
- einer inneren Auskleidung (1, 1'), die mit der äußeren Wagentürplatte (3, 3') durch erste hinzugefügte Befestigungsmittel (36) befestigt ist, und wobei mindestens einige der Funktionselemente (11) an der äußeren Wagentürplatte durch diese ersten hinzugefügten Befestigungsmittel und/oder durch zweite hinzugefügte Befestigungsmittel (96, 98) befestigt sind.

11. Wagentür nach Anspruch 10, **dadurch gekennzeichnet, daß** gegenüber der äußeren Wagentürplatte mindestens einige der Funktionselemente (7, 11, 99, 101) entlang ihrer geführten Bewegung zwischen einer ersten Vormontageposition und einer zweiten Befestigungsposition beweglich sind, in welcher die vorbestimmten Befestigungszonen (81 und 87) auf der äußeren Wagentürplatte (3, 39) und auf diesen Funktionselementen (11) zusammenfallen.

12. Wagentür nach Anspruch 10 oder Anspruch 11, **dadurch gekennzeichnet, daß** mindestens einige der Funktionselemente (11) und die äußere Wagentürplatte (3) komplementäre Indexierungsmittel (85a, 87a) für ein eindeutiges Positionieren dieser Funktionselemente gegenüber der äußeren Platte entlang der geführten Bewegung hinsichtlich ihrer Befestigung aufweisen.

13. Wagentür nach Anspruch 11 und Anspruch 12, **dadurch gekennzeichnet, daß** die komplementären Indexierungsmittel Einsteck(87a)- und Aufnahme(85a)-Haltemittel aufweisen, die entsprechend auf dem betreffenden Funktionselement (11) und auf der äußeren Wagentürplatte (3, 39) angeordnet sind, wobei die Einsteckmittel (87a) in den Aufnahmemitteln (85a) in der zweiten Befestigungsposition in Eingriff kommen und sich blockieren, um die äußere Platte und das Funktionselement in sich zurückzuhalten.

14. Verfahren zum Zusammenbau eines Funktionselementes (7, 11, 99, 101) einer Kraftfahrzeugtür, wie zum Beispiel einer Scheibenhebeschiene (11, 99, 101) und/oder einer Verschlußvorrichtung (7), und einer inneren Auskleidung (1, 1') einer solchen Wagentür auf einer äußeren Platte (3, 3') dieser Wagentür, wie zum Beispiel einer Blechplatte, welche einen Kasten (39, 41) bestimmt, **dadurch gekennzeichnet, daß**:
- man in einer Vormontageposition das Funktionselement (7, 11, 99, 101) mit einer Trägerplatte (9, 9') verbindet, mit der die innere Auskleidung der Wagentür versehen ist, wobei eine bewegliche Verbindung mittels Verbindungs- und Führungsmitteln (67, 125, 111, 115, 117) sichergestellt ist,
- man dieses Funktionselement in eine erste Vormontageposition bringt, die dazu bestimmt ist, das Positionieren der inneren Auskleidung im wesentlichen gegen die äußere Platte (3, 3') zu erlauben,
- man die Wagentürauskleidung (1, 1'), welche ihre Trägerplatte aufweist, die mit dem Funktionselement verbunden ist, an eine Stelle für den Zusammenbau bringt,
- man dort die Trägerplatte (9, 9') im wesentlichen gegen die äußere Wagentürplatte (3, 3') anordnet und das Funktionselement in einer zweiten Position, Betriebsfunktion, plaziert, wobei die Bewegung zwischen den zwei Positionen durch die Verbindungs- und Führungsmittel geführt wird,
- und man die innere Auskleidung (1, 1') und gegebenenfalls das betreffende Funktionselement mit der äußeren Platte (3, 3') befestigt.

## Claims

1. Interior lining (1, 1') for a car door comprising:
- a rigid carrier panel (9, 9'),
- functional elements (7, 11, 45, 51, 99, 101) which are adapted to the operation of the door, such as at least one window lifting rail (11, 99, 111) for raising or lowering the window of the door and a door lock (7),
**characterized in that** at least some of the functional elements (7, 11, 45, 51, 99, 101) are connected to the carrier panel (9, 9') in a movable manner by connecting and guiding means (65, 67, 111, 115, 117, 125, 127) which direct the functional element(s) in accordance with a guided movement relative to the carrier panel between a first pre-assembly position, intended to allow the positioning of the lining substantially against an exterior door panel (3, 3'), and a second operating position.

2. Lining according to claim 1, **characterized in that** the connecting and guiding means (65, 67, 111, 115, 117, 125, 127) comprise at least one support (69, 112, 129) which is integrated into the carrier panel and which is offset in a protruding manner or in a recessed manner relative to a general surface thereof (9a, 9'a), that support incorporating a guiding region (67, 111, 125) to direct the functional element concerned relative to the carrier panel in accordance with the guided movement.

3. Lining according to claim 2, **characterized in that** the carrier panel and the support comprise substantially or exclusively a synthetic material, such as at least one plastics material.

4. Lining according to anyone of preceding claims, **characterized in that** a window lifting rail (11) is connected, with an axis of rotation (67), to a rib (69, 112) which protrudes from the general plane (9a, 9'a) of the support panel (9, 9') whilst being movable in rotation about, or in relation to, that rib.

5. Lining according to anyone of preceding claims, **characterized in that** a lock and/ or the lock-carrier thereof (7) is/are arranged in a slide (125) connected to the support panel (9').

6. Lining according to anyone of preceding claims, **characterized in that** the lining has, as well as the functional elements concerned, fixing passages (29, 30, 35,...) for fixing those elements and/ or the lining to an exterior door panel (3, 3'), such as a sheet metal panel.

7. Lining according to anyone of claims 1 to 3, **characterized in that** the connecting and guiding means comprise means (115, 117) which are deformable between two end positions in order to guide the movement of the functional elements concerned between those two positions.

8. Lining according to anyone of claims 1 to 3 or 7, **characterized in that** at least one window lifting rail (99, 101) is fixed to a deformable parallelogram (115, 117) which is connected to the carrier panel (9').

9. Lining according to claims 3 and 8, **characterized in that** the deformable parallelogram (115, 117) is of a plastics material which is more malleable than the main plastics material of the carrier panel (9'), that more malleable material covering locally the main plastics material of the carrier panel, at least adjacent to the positioning region of the parallelogram(s).

10. Motor vehicle door comprising:
- an exterior door panel (3, 3'), such as a sheet metal panel,
- an interior door lining (1, 1') according to anyone of preceding claims, such as a lining which is substantially of a plastics material, and
- the interior lining (1, 1') being fixed to the exterior door panel (3, 3') by separate first fixing means (36) and at least some of the functional elements (11) being fixed to the exterior door panel by the separate first fixing means and/ or by separate second fixing means (96, 98).

11. Door according to claim 10, **characterized in that**, in respect of the exterior door panel, at least some of the functional elements (7, 11, 99, 101) are movable in accordance with their guided movement between a first pre-assembly position and a second fixing position, in which the predetermined fixing regions (81 and 87) on the exterior door panel (3, 39) and on those functional elements (11) coincide.

12. Door according to claim 10 or claim 11, **characterized in that** at least some of the functional elements (11) and the exterior door panel (3) comprise complementary indexing means (85a, 87a) for a unequivocal positioning of those functional elements in respect of the exterior panel in accordance with the guided movement with a view to the fixing thereof.

13. Door according to claim 11 or claim 12, **characterized in that** the complementary indexing means comprise male (87a) and female (85a) holding means which are arranged in alignment on the functional element concerned (11) and on the exterior door panel (3, 39), the male means (87a) being engaged and locked in the female means (85a) in the second fixing position in order together to hold the exterior panel and the functional element.

14. Method for fitting a functional element (7, 11, 99, 101) of a car door, such as a window lifting rail (11, 99, 101) and/ or a lock (7), and an interior lining (1, 1') of such a door, to an exterior panel (3, 3') of that door, such as a sheet metal panel which defines a casing (39, 41), **characterized in that**:
- the functional element (7, 11, 99, 101) is connected, in a pre-assembly position, to a carrier panel (9, 9'), with which the interior door lining is provided, ensuring a connection which is movable, by way of connecting and guiding means (67, 125, 111, 115, 117),
- that functional element is placed in a first pre-assembly position which is intended to allow the positioning of the interior lining substantially against the exterior panel (3, 3'),
- the door lining (1, 1'), comprising its carrier panel connected to the functional element, is moved to an assembly station,
- there, the carrier panel (9, 9') is arranged substantially against the exterior door panel (3, 3') and the functional element is placed in a second operational position, the movement between the two positions being guided by the connecting and guiding means,
- and the interior lining (1, 1') and, possibly, the functional element concerned are fixed to the exterior panel (3, 3').
